# EUROPEAN PATENT APPLICATION

(11) **EP 4 325 758 A1**
(43) Date of publication of application: **21.02.2024**
(21) Application number: 22787428.6
(22) Date of filing: 07.04.2022
(51) Int. Cl.: H04L 5/00

(54) **METHOD AND APPARATUS FOR CONFIGURING MEASUREMENT GAP PATTERN, AND TERMINAL AND NETWORK-SIDE DEVICE**

(30) Priority: 12.04.2021 CN 202110390254
(71) Applicant: Vivo Mobile Communication Co., Ltd., Dongguan, Guangdong 523863 (CN)
(72) Inventor: WEI, Xusheng, Dongguan, Guangdong 523863 (CN)
(74) Representative: Murgitroyd & Company
(86) International application number: PCT/CN2022/085520
(87) International publication number: WO 2022/218202

(57) **Abstract**

This application discloses a measurement gap pattern configuration method and apparatus, a terminal, and a network-side device, and pertains to the field of communication technologies. The measurement gap pattern configuration method in embodiments of this application includes: grouping, by a network-side device, measuring objects for a terminal to obtain a grouping result; configuring, by the network-side device, a corresponding measurement gap pattern for each different group; and transmitting, by the network-side device, a first message to the terminal, where the first message carries the grouping result and the measurement gap pattern corresponding to each different group.

## Description

### CROSS-REFERENCE TO RELATED APPLICATION

This application claims priority to Chinese Patent Application No. 202110390254.9, filed in China on April 12, 2021, which is incorporated herein by reference in its entirety.

### TECHNICAL FIELD

This application pertains to the field of communication technologies and specifically relates to a measurement gap pattern configuration method and apparatus, a terminal, and a network-side device.

### BACKGROUND

In radio resource management (Radio Resource Management, RRM) measurements, for inter-frequency (inter-frequency) and inter-radio access technology (inter-Radio Access Technology, inter-RAT) measurements, due to the fact that a carrier frequency of the serving cell may be different compared with that of an inter-frequency cell or inter-RAT cell, it is not possible to use one same radio frequency chain (Radio Frequency Chain, RF Chain) to execute the serving cell signal transceiving and inter-frequency measurements simultaneously. Therefore, in a case that a terminal radio frequency chain is limited, a gap (gap) needs to be introduced for performing the measurements. When another cell is being measured in a gap, transmissions and receptions of the serving cell cannot be completed, resulting in a decrease in throughput. To ensure that measurements based on the measurement gap are more efficient, multiple measuring objects (Measuring Object, MO), such as multiple synchronization signal blocks (Synchronization Signal Block, SSB) need to be aligned in time domain as much as possible. However, this will reduce the flexibility of network configuration. To achieve more flexible network configuration and reduce overheads of measurement gaps, multiple measurement gap patterns (gap pattern) are configured for one terminal in an existing protocol. However, no effective solution exists for how a network-side device configures a measurement gap for a terminal under a multi-gap pattern condition.

### SUMMARY

Embodiments of this application provide a measurement gap pattern configuration method and apparatus, a terminal, and a network-side device, so as to solve the problem in the prior art that a manner of how the network-side device configures a measurement gap for the terminal under a multi-gap pattern condition has not yet existed.

According to a first aspect, a measurement gap pattern configuration method is provided, including: grouping, by a network-side device, measuring objects for a terminal to obtain a grouping result; configuring, by the network-side device, a corresponding measurement gap pattern for each different group; and transmitting, by the network-side device, a first message to the terminal, where the first message carries the grouping result and the measurement gap pattern corresponding to each different group.

According to a second aspect, a performance indicator determining method is provided, including: receiving, by a terminal, a first message transmitted by a network-side device, where the first message carries a grouping result and a measurement gap pattern corresponding to each different group, the grouping result referring to division of measuring objects for the terminal into different groups; and determining, by the terminal, a performance indicator associated with the measurement gap pattern.

According to a third aspect, a measurement gap pattern configuration apparatus is provided, applied to a network-side device and including: a grouping module, configured to group measuring objects for a terminal to obtain a grouping result; a configuration module, configured to configure a corresponding measurement gap pattern for each different group; and a transmitting module, configured to transmit a first message to the terminal, where the first message carries the grouping result and the measurement gap pattern corresponding to each different group.

According to a fourth aspect, a performance indicator determining apparatus is provided, applied to a terminal and including: a receiving module, configured to receive a first message transmitted by a network-side device, where the first message carries a grouping result and a measurement gap pattern corresponding to each different group, the grouping result referring to division of measuring objects for the terminal into different groups; and a determining module, configured to determine a performance indicator associated with the measurement gap pattern.

According to a fifth aspect, a network-side device is provided, where the network-side device includes a processor, a memory, and a program or instructions stored in the memory and executable on the processor, and when the program or instructions are executed by the processor, the steps of the method according to the first aspect are implemented.

According to a sixth aspect, a network-side device is provided, including: a processor and a communication interface, where the processor is configured to: group measuring objects for a terminal to obtain a grouping result; and configure a corresponding measurement gap pattern for each different group; where the communication interface is used for transmitting a first message to the terminal, where the first message carries the grouping result and the measurement gap pattern corresponding to each different group.

According to a seventh aspect, a terminal is provided, where the terminal includes a processor, a memory, and a program or instructions stored in the memory and executable on the processor, and when the program or instructions are executed by the processor, the steps of the method according to the second aspect are implemented.

According to an eighth aspect, a terminal is provided, including a processor and a communication interface, where the communication interface is used for receiving a first message transmitted by a network-side device, where the first message carries a grouping result and a measurement gap pattern corresponding to each different group, the grouping result referring to division of measuring objects for the terminal into different groups; and the processor is configured to determine a performance indicator associated with the measurement gap pattern.

According to a ninth aspect, a readable storage medium is provided, where the readable storage medium stores a program or instructions, and when the program or the instructions are executed by a processor, the steps of the method according to the first aspect are implemented, or the steps of the method according to the second aspect are implemented.

According to a tenth aspect, a chip is provided, where the chip includes a processor and a communication interface, the communication interface is coupled to the processor, and the processor is configured to run a program or instructions so as to implement the method according to the first aspect or the method according to the second aspect.

According to an eleventh aspect, a computer program product is provided, where the computer program product is stored in a non-volatile storage medium, and the computer program product is executed by at least one processor so as to implement the method according to the first aspect or to implement the method according to the second aspect.

In the embodiments of this application, the network-side device groups the measuring objects for the terminal, configures the corresponding measurement gap pattern for each different group, and then transmits the grouping result and the measurement gap pattern corresponding to each different group to the terminal. It can be seen that the network-side device can configure a corresponding measurement gap pattern based on the measuring objects of each different group. Therefore, under a multi-measurement gap pattern condition, a corresponding measurement gap pattern can be assigned to a plurality of measuring objects (the plurality of measuring objects are grouped), thus solving the problem in the prior art that a manner of how the network-side device configures a measurement gap for the terminal under a multi-gap pattern condition has not yet existed, and improving the testing efficiency in scenarios where multiple measurement gap patterns are configured.

### BRIEF DESCRIPTION OF DRAWINGS

FIG. 1 is a block diagram of a wireless communication system to which the embodiments of this application are applicable;
FIG. 2 is a flowchart of a measurement gap pattern configuration method according to an embodiment of this application;
FIG. 3 is a schematic configuration diagram of a network controlled small gap (Network Controlled Small Gap, NCSG) under a multi-gap pattern mechanism according to an embodiment of this application;
FIG. 4 is a flowchart of a performance indicator determining method according to an embodiment of this application;
FIG. 5 is a schematic structural diagram of a measurement gap pattern configuration apparatus according to an embodiment of this application;
FIG. 6 is a schematic structural diagram of determining a performance indicator according to an embodiment of this application;
FIG. 7 is a schematic structural diagram of a communication device according to an embodiment of this application;
FIG. 8 is a schematic structural diagram of a terminal according to an embodiment of this application; and
FIG. 9 is a schematic structural diagram of a network-side device according to an embodiment of this application.

### DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application shall fall within the protection scope of this application.

The terms "first", "second", and the like in this specification and claims of this application are used to distinguish between similar objects rather than to describe a specific order or sequence. It should be understood that terms used in this way are interchangeable in appropriate circumstances so that the embodiments of this application can be implemented in other orders than the order illustrated or described herein. In addition, "first" and "second" are usually used to distinguish objects of a same type, and do not restrict a quantity of objects. For example, there may be one or a plurality of first objects. In addition, "and/or" in the specification and claims represents at least one of connected objects, and the character "/" generally indicates that the associated objects have an "or" relationship.

It should be noted that technologies described in the embodiments of this application are not limited to a long term evolution (Long Term Evolution, LTE) or LTE-Advanced (LTE-Advanced, LTE-A) system, and may also be applied to other wireless communication systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are often used interchangeably, and the technology described herein may be used in the above-mentioned systems and radio technologies as well as other systems and radio technologies. In the following descriptions, a new radio (New Radio, NR) system is described for an illustration purpose, and NR terms are used in most of the following descriptions, although these technologies may also be applied to other applications than an NR system application, for example, the 6th generation (6^{th} Generation, 6G) communication system.

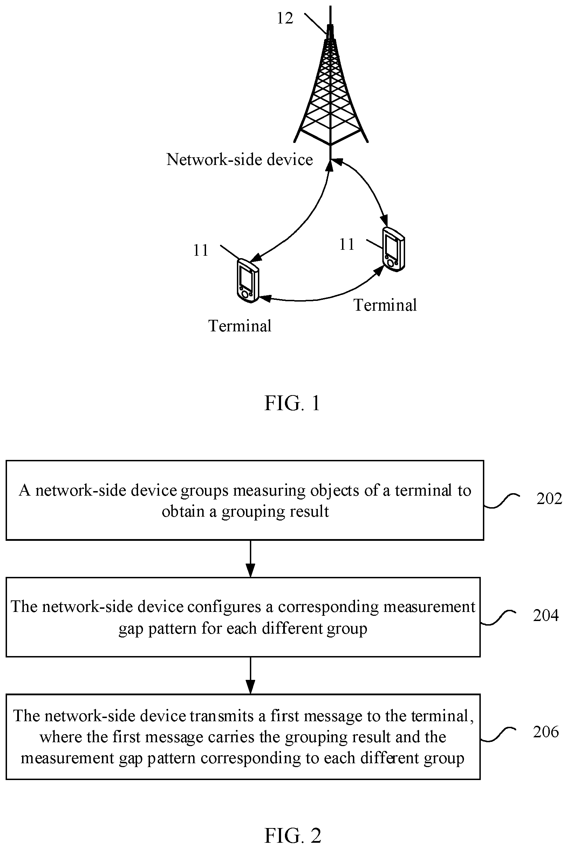

FIG. 1 is a block diagram of a wireless communication system to which the embodiments of this application are applicable. The wireless communication system includes a terminal 11 and a network-side device 12. The terminal 11 may also be referred to as a terminal device or user equipment (User Equipment, UE), and the terminal 11 may be a terminal-side device, such as a mobile phone, a tablet computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), a wearable device (Wearable Device) or vehicle user equipment (Vehicle User Equipment, VUE), or pedestrian user equipment (Pedestrian User Equipment, PUE). The wearable device includes: a smartwatch, a wrist band, earphones, glasses, or the like. It should be noted that a specific type of the terminal 11 is not limited in the embodiments of this application. The network-side device 12 may be a base station or a core network. The base station may be referred to as an access point, a base transceiver station (Base Transceiver Station, BTS), a radio base station, a radio transceiver, a basic service set (Basic Service Set, BSS), an extended service set (Extended Service Set, ESS), a Node B, an evolved node B (eNB), a home NodeB, a home evolved NodeB, a WLAN (Wireless Local Area Networks, WLAN) access point, a wireless fidelity (Wireless Fidelity, Wi-Fi) node, a transmitting receiving point (Transmitting Receiving Point, TRP), or some other appropriate terms in the art. The base station is not limited to a specific technical term as long as the same technical effect is achieved. It should be noted that the base station in the NR system is taken merely as an example in the embodiments of this application, but the base station is not limited to any specific type.

The following describes in detail a measurement gap pattern configuration method provided in the embodiments of this application by using some embodiments and application scenarios thereof with reference to the accompanying drawings.

As shown in FIG. 2, an embodiment of this application provides a measurement gap pattern configuration method, and the method includes the following steps.

Step 202: A network-side device groups measuring objects for a terminal to obtain a grouping result.

Step 204: The network-side device configures a corresponding measurement gap pattern for each different group.

Step 206: The network-side device transmits a first message to the terminal, where the first message carries the grouping result and the measurement gap pattern corresponding to each different group.

In steps 202 to 206, the network-side device groups the measuring objects for the terminal, configures the corresponding measurement gap pattern for each different group, and then transmits the grouping result and the measurement gap pattern corresponding to each different group to the terminal. It can be seen that the network-side device can configure a corresponding measurement gap pattern based on the measuring objects of each different group. Therefore, under a multi-measurement gap pattern condition, a corresponding measurement gap pattern can be assigned to a plurality of measuring objects (the plurality of measuring objects are grouped), thus solving the problem in the prior art that a manner of how the network-side device configures a measurement gap for the terminal under a multi-gap pattern condition has not yet existed, and guaranteeing measuring efficiency of the terminal in scenarios where multiple measurement gap patterns are configured.

In this embodiment of this application, the network-side device grouping the measuring objects tfor a terminal to obtain the grouping result in step 202 may further include the following steps.

Step 202-11: The network-side device determines a gap and offset of samples of measuring objects that need to be measured by the terminal.

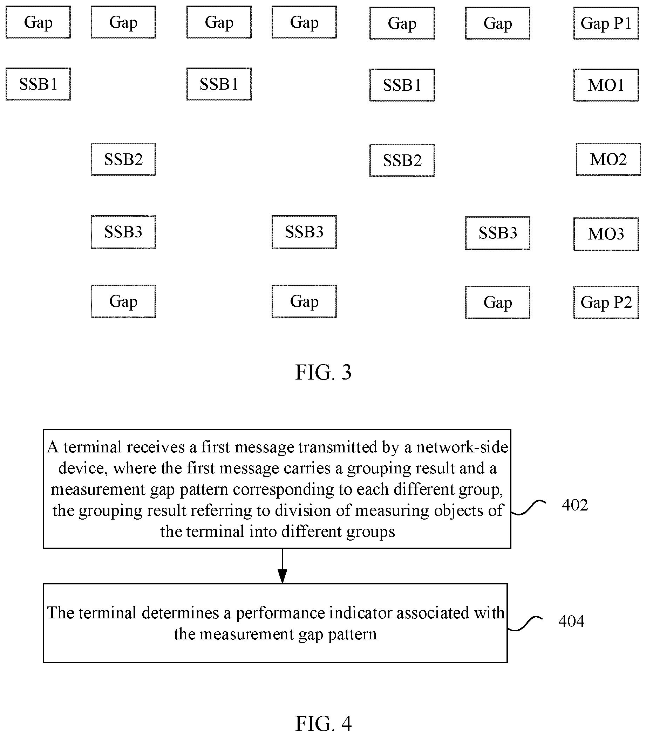

It should be noted that the measuring objects for the terminal in this embodiment of this application may be resources that need to be measured such as SSBs, channel state information-reference signals (Channel State Information - Reference Signal, CSI-RS), positioning reference signals (Positioning Reference Signal, PRS), and an inter-RATs (LTE). Therefore, taking the measuring objects being SSBs as an example, as shown in FIG. 3, samples of a measuring object1 (MO1) of the terminal in this embodiment of this application may be a plurality of SSB1s, samples of a measuring object 2 (MO2) may be a plurality of SSB2s, and samples of a measuring object 3 (MO3) may be a plurality of SSB3s.

Step 202-12: The network-side device determines a gap value set for any two of the measuring objects based on the gap and the offset.

It should be noted that with the gap between the samples of each measuring object (MO) available for use in the measurement and the sample offset (offset), a position of any one of the samples of any one of the measuring objects in time domain can be determined based on the offset and the gap, specifically, the position is a sum of an integer multiple of the gap of the samples and the offset.

In addition, the gap value set for any two of the measuring objects includes: a gap value for any two adjacent samples corresponding to different measuring objects among a plurality of samples corresponding to any two of the measuring objects.

Step 202-13: The network-side device divides measuring objects corresponding to a gap value set that meets a target condition into one group.

Step 202-14: The network-side device divides each measuring object corresponding to a gap value set that does not meet the target condition into a separate group.

In steps 202-13 and 202-14, the measuring objects corresponding to the gap value set that meets the target condition are divided into one group, while for the measuring objects corresponding to the gap value set that does not meet the target condition, since they do not meet the target condition with each other, each of them is divided into a separate group.

In an optional implementation of this embodiment of this application, the target condition in this embodiment of this application may include: the gap value set containing a gap value of 0 and also a non-zero gap value; and all elements in a set of non-zero gap values being integer multiples of a minimum gap value, where the minimum gap value is the smallest non-zero gap value in the gap value set.

Taking FIG. 3 as an example, it can be seen that MO1 and MO2 are divided into one group, and MO3 is a separate group. Because the gap between the third SSB1 of MO1 and the second SSB2 of MO2 is 0, and the minimum gap between the samples of MO1 and the samples of MO3 is the gap between the first SSB1 of MO1 and the first SSB2 of MO2, which is 1/2 gap, and the other gaps are 2 times or 4 times of the minimum gap. In addition, MO3 does not meet the foregoing condition with either MO1 or MO2. Thus, MO1 and MO2 may be measured using a single gap pattern; while for MO3, the gaps between MO3 and any neighboring sample of MO1 and MO2 are not 0, and thus a separate gap pattern2 is required for measurement.

In an optional implementation of this embodiment of this application, for the measurement gap pattern and a measurement gap repetition period (Measurement Gap Repetition Period, MGRP) in this embodiment of this application, in a case of a limited MGRP, the number of samples of each measuring object that do not overlap the measurement gap should be as small as possible to ensure that the measurements are completed as quickly as possible; furthermore, the number of vacant gaps (with no sample of any measuring object in each gap) should be as small as possible to reduce the negative impact on the throughput. The measurement performance in a case of a plurality of measurement gaps can be improved with the above setting.

In an optional implementation of this embodiment of this application, the first message in this embodiment of this application carries a mapping list, where the mapping list is used to indicate mappings between measurement gap patterns and measuring objects.

It should be noted that the first message in this embodiment of this application may be radio resource control (Radio Resource Control, RRC) signaling. In existing measument configuration (MeasConfig), a relation between multiple MOs and a gap pattern is established. Configuration of multiple measurement gaps in this application can be realized by modifying the configuration information structure, that is, by providing improvement on the basis of existing MeasConfig. Specifically, there are the following two manners: (1) Multiple MeasConfig-like messages are used. In one MeasConfig-like message, an association relationship between one or more MOs, which are divided into one same group, and a gap pattern is established. For example, if there are 10 MOs, and the 10 MOs are divided into two groups, and each group corresponds to a different gap pattern, then two MeasConfig-like messages can be used. In the content of the message structure of these two MeasConfig-like messages, the measuring object list corresponds to one of the two groups, and the gap pattern configuration is the gap pattern configuration corresponding to this group. Through the above manner, an association relationship between each MO group and the gap pattern assigned for the group can be established. (2) A new message structure is designed by providing improvement on the basis of the MeasConfig structure, that is, by creating multiple measuring object lists, multiple measurement report lists, and a gap pattern list, for example, multiple measObjectToRemoveList (measuring object to remove list), measObjectToAddModList (measuring object to add list), reportConfigToRemoveList (report configuration to remove list), reportConfigToAddModList (report configuration to add list), and measGapConfig (measurement gap configuration). In this way, by creating the foregoing lists, in a MeasConfig-like message, the relationship between different groups of measuring objects and the corresponding gap pattern can be established.

This application is explained from the view of a network-side device in FIG. 2, and this application is explained from the view of a terminal side below.

As shown in FIG. 4, an embodiment of this application further provides a performance indicator determining method, and the method includes the following steps.

Step 402: A terminal receives a first message transmitted by a network-side device, where the first message carries a grouping result and a measurement gap pattern corresponding to each different group, the grouping result referring to division of measuring objects for the terminal into different groups.

Step 404: The terminal determines a performance indicator associated with the measurement gap pattern.

In steps 402 and 404, the terminal determines the performance indicator associated with the corresponding measurement gap pattern for grouped measuring objects, that is, the terminal realizes how a new performance indicator that needs to be met by the terminal is reassessed under the multi-gap pattern configuration, thereby solving the problem of how the new performance indicator that needs to be met by the terminal is reassessed under the multi-gap pattern configuration in the prior art.

In an optional implementation of this embodiment of this application, the method that the terminal determines a performance indicator associated with the measurement gap pattern in step 404 may further include the following steps.

Step 404-11: The terminal determines a carrier-specific scaling factor (Carrier-Specific Scaling Factor, CSSF) corresponding to each measuring object in a first group based on a measurement gap pattern corresponding to the first group, where the first group is any group in the grouping result.

Step 404-12: The terminal determines the performance indicator based on the CSSF.

It should be noted that the CSSF may include a CSSF_{within_gap} (within the measurement gap) and a CSSF_{outsie_gap} (outside the measurement gap).

It should be noted that the grouping result in this embodiment of this application includes: measuring objects corresponding to a gap value set that meets a target condition being divided into one group; and each measuring object corresponding to a gap value set that does not meet the target condition being divided into a separate group.

The gap value refers to a gap value set, for any two of the measuring objects, determined based on a gap and offset of samples of measuring objects of the terminal. A gap value set for any two of the measuring objects includes: a gap value for any two adjacent samples corresponding to different measuring objects among a plurality of samples corresponding to any two of the measuring objects. In addition, the foregoing described target condition includes: the gap value set containing a gap value of 0, and all non-zero gap values being integer multiples of a minimum gap value, where the minimum gap value is the smallest non-zero gap value in the gap value set.

The following describes, with examples, this embodiment of this application with reference to FIG. 3.

For the three measuring objects (MO) in FIG. 3, MO1 and MO2 have different offsets. The gap between any two adjacent samples of MO1 and MO2 is 0 in some cases. Among all the gaps that are not 0, there is only one gap value; therefore, according to the foregoing gap pattern configuration method, the network-side device configures that MO1 and MO2 can use one gap pattern for the measurement, and for MO3, none of the gaps between MO3 and any neighboring samples of MO1 and MO2 is 0, so MO3 needs a separate gap pattern, that is, gap pattern2, for the measurement. Thus, MO1 and MO2 are measured with gap1, and MO3 is measured with gap2. This may be informed to the terminal through RRC configuration.

During the recalculation of the performance indicator by the terminal, for the CSSF_{within_gap} and the CSSF_{outsie_gap} of MO1 and MO2, only the case that MO1 and MO2 sharing gap pattern 1 needs to be considered, and the existence of gap pattern 2 needs not to be considered. During the calculation of CSSF_{within_gap} and CSSF_{outsie_gap} of MO3, only the case that MO3 uses gap pattern 2 exclusively needs to be considered, and the existence of gap pattern 1 needs not to be considered. Further, based on the new CSSF_{within_gap} and CSSF_{outsie_gap}, the performance indicator that the terminal needs to meet under the multi-gap pattern condition can be further calculated, for example, primary synchronization signal (Primary Synchronization Signal, PSS ), secondary synchronization signal (Secondary Synchronization Signal, SSS), time index detection (time index detection), measurement (measurement), cell identification (cell identification), and another performance indicator. As shown in Table 1, the performance indicators for the new PSS/SSS detection (detection) can be derived using the new CSSFᵢₙₜₑᵣ (derived from CSSF_{outsie_gap}).

**Table 1**

| Condition (Condition^{NOTE1,2}) | T_{PSS/SSS_sync_inter} |
|---|---|
| No discontinuous reception (Discontinuous Reception, DRX) | (Maximum) Max(600 ms, 8 × Max(MGRP, SMTC (SS/PBCH block measurement time configuration, synchronization block measurement time configuration) period)) × CSSFᵢₙₜₑᵣ |
| DRX cycle (cycle) ≤ 320 ms | Max(600 ms, Ceil(8*1.5) × Max(MGRP, SMTC period, DRX cycle)) × CSSFᵢₙₜₑᵣ |
| DRX cycle > 320 ms | 8 × DRX cycle × CSSFᵢₙₜₑᵣ |

It should be noted that even if the MOs are of the same nature, for example, multiple MOs all belong to inter-frequency MOs, different MOs may have different performance indicator requirements depending on the relationship between the measurement gaps and the MOs.

It should be noted that the measurement gap pattern configuration method and the performance indicator determining method provided in the embodiments of this application may be performed by the corresponding measurement gap pattern configuration apparatus and the performance indicator determining apparatus, or be performed by a control module configured to perform the measurement gap pattern configuration method in the measurement gap pattern configuration apparatus, and a control module configured to perform the performance indicator determining method in the performance indicator determining apparatus. In the embodiments of this application, the measurement gap pattern configuration method and the performance indicator determining method being performed by the measurement gap pattern configuration apparatus and the performance indicator determining apparatus respectively are used as examples for describing the measurement gap pattern configuration apparatus and the performance indicator determining apparatus provided in the embodiments of this application.

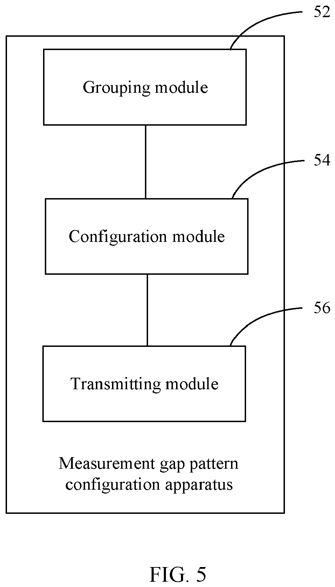

As shown in FIG. 5, an embodiment of this application provides a measurement gap pattern configuration apparatus applied to a network-side device. The apparatus includes:
a grouping module 52, configured to group measuring objects for a terminal to obtain a grouping result;
a configuration module 54, configured to configure a corresponding measurement gap pattern for each different group; and
a transmitting module 56, configured to transmit a first message to the terminal, where the first message carries the grouping result and the measurement gap pattern corresponding to each different group.

With the apparatus in this embodiment of this application, the network-side device groups the measuring objects for the terminal, configures the corresponding measurement gap pattern for each different group, and then transmits the grouping result and the measurement gap pattern corresponding to each different group to the terminal. It can be seen that the network-side device can configure a corresponding measurement gap pattern based on the measuring objects of each different group. Therefore, under a multi-measurement gap pattern condition, a corresponding measurement gap pattern can be assigned to a plurality of measuring objects (the plurality of measuring objects are grouped), thus solving the problem in the prior art that a manner of how the network-side device configures a measurement gap for the terminal under a multi-gap pattern condition has not yet existed, and improving the testing efficiency in scenarios where multiple measurement gap patterns are configured.

Optionally, the grouping module 52 in this embodiment of this application may further include: a first determining unit, configured to determine a gap and offset of samples of measuring objects that need to be measured by the terminal; a second determining unit, configured to determine a gap value set for any two of the measuring objects based on the gap and the offset; and a dividing unit, configured to: divide measuring objects corresponding to a gap value set that meets a target condition into one group, and divide each measuring object corresponding to a gap value set that does not meet the target condition into a separate group.

Optionally, a gap value set for any two of the measuring objects in this embodiment of this application includes a gap value for any two adjacent samples corresponding to different measuring objects among a plurality of samples corresponding to any two of the measuring objects.

Optionally, the target condition in this embodiment of this application may further include: the gap value set containing a gap value of 0 and also a non-zero gap value; and all elements in a set of non-zero gap values being integer multiples of a minimum gap value, where the minimum gap value is the smallest non-zero gap value in the gap value set.

Optionally, the first message in this embodiment of this application carries a mapping list, where the mapping list is used to indicate mappings between measurement gap patterns and measuring objects.

The measurement gap pattern configuration apparatus in FIG. 5 is an apparatus corresponding to the measurement gap pattern configuration method in FIG. 2.

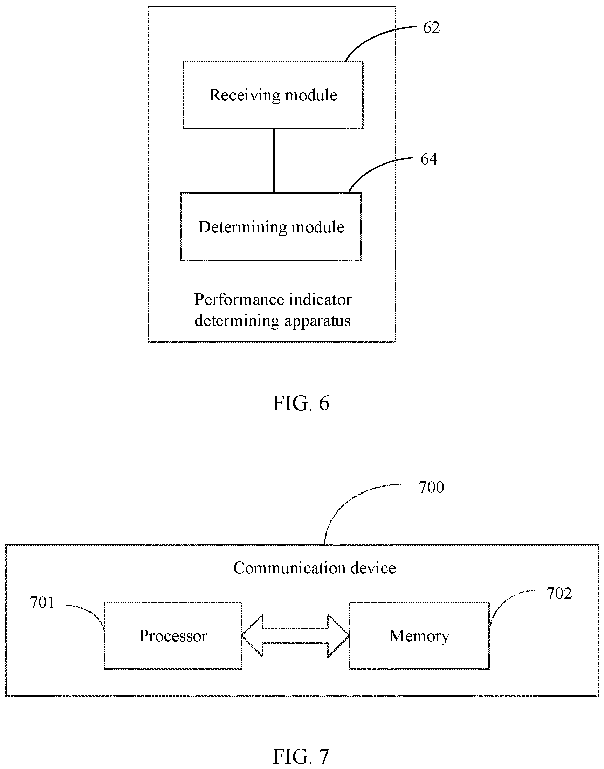

As shown in FIG. 6, an embodiment of this application provides a performance indicator determining apparatus applied to a terminal. The apparatus includes:
a receiving module 62, configured to receive a first message transmitted by a network-side device, where the first message carries a grouping result and a measurement gap pattern corresponding to each different group, the grouping result referring to division of measuring objects for the terminal into different groups; and
a determining module 64, configured to determine a performance indicator associated with the measurement gap pattern.

With the apparatus in this embodiment of this application, the performance indicator associated with the corresponding measurement gap pattern is determined for grouped measuring objects, that is, how a new performance indicator that needs to be met by the terminal is reassessed under the multi-gap pattern configuration is realized, thereby solving the problem of how the new performance indicator that needs to be met by the terminal is reassessed under the multi-gap pattern configuration in the prior art.

Optionally, the determining module in this embodiment of this application may further include: a third determining unit, configured to determine a carrier-specific scaling factor CSSF corresponding to each measuring object in a first group based on a measurement gap pattern corresponding to the first group, where the first group is any group in the grouping result; and a fourth determining unit, configured to determine the performance indicator based on the CSSF.

Optionally, it should be noted that the grouping result in this embodiment of this application includes: measuring objects corresponding to a gap value set that meets a target condition being divided into one group, and each measuring object corresponding to a gap value set that does not meet the target condition being divided into a separate group.

Optionally, the gap value in this embodiment of this application refers to a gap value set, for any two of the measuring objects, determined based on a gap and offset of samples of measuring objects of the terminal.

Optionally, the gap value set for any two of the measuring objects in this embodiment of this application includes: a gap value for any two adjacent samples corresponding to different measuring objects among a plurality of samples corresponding to any two of the measuring objects.

Optionally, the target condition in this embodiment of this application includes: the gap value set containing a gap value of 0, and all non-zero gap values being integer multiples of a minimum gap value, where the minimum gap value is the smallest non-zero gap value in the gap value set.

The performance indicator determining apparatus in FIG. 6 is an apparatus corresponding to the performance indicator determining method in FIG. 4.

The measurement gap pattern configuration apparatus and the performance indicator determining apparatus in the embodiments of this application may be an apparatus, an apparatus or an electronic device having an operating system, or a component, an integrated circuit, or a chip in a terminal. The apparatus or electronic device may be a mobile terminal or a non-mobile terminal. For example, the mobile terminal may include but is not limited to the types of the terminal 11 listed above, and the non-mobile terminal may be a server, a network attached storage (Network Attached Storage, NAS), a personal computer (Personal Computer, PC), a television (Television, TV), a teller machine, a self-service machine or the like, which are not specifically limited in the embodiments of this application.

The measurement gap pattern configuration apparatus and the performance indicator determining apparatus in the embodiments of this application can implement the processes implemented in the method embodiments in FIG. 2 and FIG. 4 respectively, with the same technical effects achieved. To avoid repetition, details are not described herein again.

Optionally, as shown in FIG. 7, an embodiment of this application further provides a communication device 700 including a processor 701, a memory 702, and a program or instructions stored in the memory 702 and executable on the processor 701. For example, when the communication device 700 is a terminal, the program or instructions are executed by the processor 701 to implement the processes of the foregoing embodiments of the measurement gap pattern configuration method and the performance indicator determining method, with same technical effects achieved. In a case that the communication device 700 is a network-side device, when the program or instructions are executed by the processor 701, the processes of the foregoing embodiments of the measurement gap pattern configuration method and the performance indicator determining method are implemented, with the same technical effects achieved. To avoid repetition, details are not described herein again.

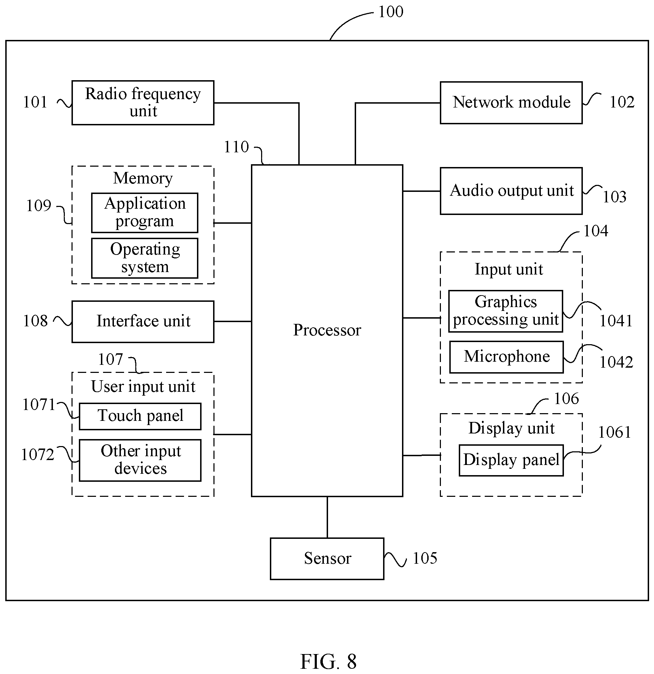

An embodiment of this application further provides a terminal including a processor and a communication interface. The processor is configured to determine a performance indicator associated with a measurement gap pattern. The communication interface is used for receiving a first message transmitted by a network-side device, where the first message carries a grouping result and a measurement gap pattern corresponding to each different group, the grouping result referring to division of measuring objects for the terminal into different groups. This terminal embodiment corresponds to the foregoing method embodiment on the terminal side. All implementations in the foregoing method embodiment may be applicable to this terminal embodiment, with the same technical effects achieved. Specifically, FIG. 8 is a schematic diagram of a hardware structure of a terminal for implementing embodiments of this application.

The terminal 100 includes but is not limited to at least some of the components such as a radio frequency unit 101, a network module 102, an audio output unit 103, an input unit 104, a sensor 105, a display unit 106, a user input unit 107, an interface unit 108, a memory 109, and a processor 110.

It can be understood by those skilled in the art that the terminal 100 may further include a power supply (for example, a battery) supplying power to the components. The power supply may be logically connected to the processor 110 via a power management system, so that functions such as charge management, discharge management, and power consumption management are implemented by using the power management system. The structure of the terminal shown in FIG. 8 does not constitute a limitation on the terminal, and the terminal may include more or fewer components than shown in FIG. 8, or combine some of the components, or arrange the components differently. Details are not described herein.

It should be understood that in this embodiment of this application, the input unit 104 may include a graphics processing unit (Graphics Processing Unit, GPU) 1041 and a microphone 1042. The graphics processing unit 1041 processes image data of a static picture or a video that is obtained by an image capture apparatus (for example, a camera) in a video capture mode or an image capture mode. The display unit 106 may include a display panel 1061. The display panel 1061 may be configured in a form of a liquid crystal display, an organic light-emitting diode display, or the like. The user input unit 107 includes a touch panel 1071 and other input devices 1072. The touch panel 1071 is also referred to as a touchscreen. The touch panel 1071 may include two parts: a touch detection apparatus and a touch controller. The other input devices 1072 may include but are not limited to a physical keyboard, a functional button (such as a volume control button or a power on/off button), a trackball, a mouse, and a joystick. Details are not described herein.

In this embodiment of this application, the radio frequency unit 101 transmits downlink data received from a network-side device to the processor 110 for processing, and in addition, transmits uplink data to the network-side device. Generally, the radio frequency unit 101 includes but is not limited to an antenna, at least one amplifier, a transceiver, a coupler, a low noise amplifier, a duplexer, and the like.

The memory 109 may be configured to store software programs or instructions and various data. The memory 109 may include a program or instruction storage area and a data storage area. The program or instruction storage area may store an operating system, an application program or instruction required by at least one function (for example, a sound playback function or an image playback function), and the like. In addition, the memory 109 may include a high-speed random access memory, and may also include a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory, for example, at least one disk storage device, flash memory device, or other non-volatile solid-state storage device.

The processor 110 may include one or more processing units. Optionally, an application processor and a modem processor may be integrated in the processor 110. The application processor primarily processes an operating system, user interfaces, application programs or instructions, and the like. The modem processor primarily processes radio communication, for example, being a baseband processor. It can be understood that the modem processor may alternatively be not integrated in the processor 110.

The radio frequency unit 101 is configured to receive a first message transmitted by a network-side device, where the first message carries a grouping result and a measurement gap pattern corresponding to each different group, the grouping result referring to division of measuring objects for the terminal into different groups. The processor 110 is configured to determine a performance indicator associated with the measurement gap pattern.

With the terminal in this embodiment of this application, the performance indicator associated with the corresponding measurement gap pattern can be determined for grouped measuring objects, that is, how a new performance indicator that needs to be met by the terminal is reassessed under the multi-gap pattern configuration is realized, thereby solving the problem of how the new performance indicator that needs to be met by the terminal is reassessed under the multi-gap pattern configuration in the prior art.

Optionally, the processor 110 is further configured to: determine a carrier-specific scaling factor CSSF corresponding to each measuring object in a first group based on a measurement gap pattern corresponding to the first group, and determine the performance indicator based on the CSSF; where the first group is any group in the grouping result.

An embodiment of this application further provides a network-side device including a processor and a communication interface. The communication interface is used for receiving a first message transmitted by a network-side device, where the first message carries a grouping result and a measurement gap pattern corresponding to each different group, the grouping result referring to division of measuring objects for the terminal into different groups. The processor is configured to determine a performance indicator associated with the measurement gap pattern. The network-side device embodiment corresponds to the foregoing network-side device method embodiments, and the implementations in the foregoing method embodiments are applicable to this network-side device embodiment, with the same technical effects achieved.

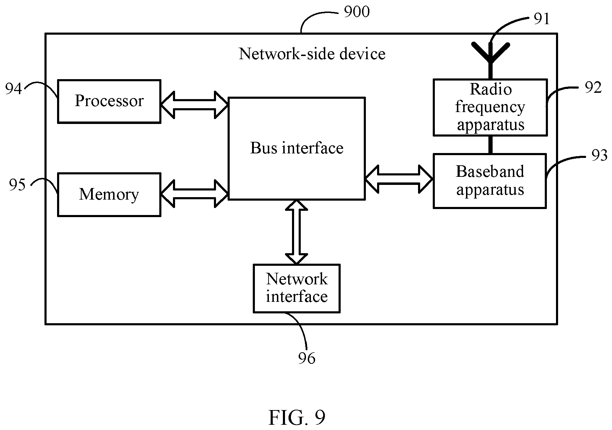

Specifically, an embodiment of this application further provides a network-side device. As shown in FIG. 9, the network device 900 includes an antenna 91, a radio frequency apparatus 92, and a baseband apparatus 93. The antenna 91 is connected to the radio frequency apparatus 92. In an uplink direction, the radio frequency apparatus 92 receives information by using the antenna 91, and transmits the received information to the baseband apparatus 93 for processing. In a downlink direction, the baseband apparatus 93 processes to-be-transmitted information, and transmits the information to the radio frequency apparatus 92; and the radio frequency apparatus 92 processes the received information and then transmits the information out by using the antenna 91.

The frequency band processing apparatus may be located in the baseband apparatus 93. The method performed by the network-side device in the foregoing embodiments may be implemented in the baseband apparatus 93, and the baseband apparatus 93 includes a processor 94 and a memory 95.

The baseband apparatus 93 may include, for example, at least one baseband, where multiple chips are disposed on the baseband. As shown in FIG. 9, one of the chips is, for example, the processor 94, connected to the memory 95, to invoke a program in the memory 95 to perform the operations of the network device shown in the foregoing method embodiments.

The baseband apparatus 93 may further include a network interface 96 configured to exchange information with the radio frequency apparatus 92, where the interface is, for example, a common public radio interface (common public radio interface, CPRI for short).

Specifically, the network-side device in this embodiment of the present invention further includes instructions or a program stored in the memory 95 and executable on the processor 94. The processor 94 invokes the instructions or program in the memory 95 to perform the method performed by the modules shown in FIG. 2, with the same technical effects achieved. To avoid repetition, details are not described herein again.

An embodiment of this application further provides a readable storage medium, where the readable storage medium stores a program or instructions, and when the program or instructions are executed by a processor, the processes of the foregoing embodiments of the measurement gap pattern configuration method and the performance indicator determining method are implemented, with the same technical effects achieved. To avoid repetition, details are not described herein again.

The processor is a processor in the terminal described in the foregoing embodiment. The readable storage medium includes a computer-readable storage medium, such as a computer read-only memory (Read-Only Memory, ROM), a random access memory (Random Access Memory, RAM), a magnetic disk, or an optical disc.

An embodiment of this application further provides a chip, where the chip includes a processor and a communication interface, the communication interface is coupled to the processor, and the processor is configured to run a program or instructions so as to implement the processes of the foregoing embodiments of the measurement gap pattern configuration method and the performance indicator determining method, with the same technical effects achieved. To avoid repetition, details are not described herein again.

It should be understood that the chip mentioned in this embodiment of this application may also be referred to as a system-level chip, a system chip, a chip system, a system-on-chip, or the like.

An embodiment of this application further provides a computer program product, where the computer program product is stored in a non-transitory readable storage medium, and when the computer program product is executed by at least one processor, the processes of the foregoing embodiments of the measurement gap pattern configuration method or the performance indicator determining method are implemented, with the same technical effects achieved. To avoid repetition, details are not described herein again.

It should be noted that in this specification, the terms "include" and "comprise", or any of their variants are intended to cover a non-exclusive inclusion, such that a process, method, article, or apparatus that includes a list of elements not only includes those elements but also includes other elements that are not expressly listed, or further includes elements inherent to such process, method, article, or apparatus. Without more constraints, an element preceded by "includes a..." does not preclude the presence of other identical elements in the process, method, article, or apparatus that includes the element. In addition, it should be noted that the scope of the method and apparatus in the implementations of this application is not limited to functions being performed in the order shown or discussed, but may further include functions being performed at substantially the same time or in a reverse order, depending on the functions involved. For example, the described method may be performed in an order different from the order described, and steps may be added, omitted, or combined. In addition, features described with reference to some examples may be combined in other examples.

By means of the foregoing description of the implementations, persons skilled in the art may clearly understand that the method in the foregoing embodiment may be implemented by software with a necessary general hardware platform. Certainly, the method in the foregoing embodiment may also be implemented by hardware. However, in many cases, the former is a preferred implementation. Based on such an understanding, the technical solutions of this application essentially or the part contributing to the prior art may be implemented in a form of a computer software product. The computer software product is stored in a storage medium (such as a ROM/RAM, a magnetic disk, or an optical disc), and includes several instructions for instructing a terminal (which may be a mobile phone, a computer, a server, an air conditioner, a network device, or the like) to perform the methods described in the embodiments of this application.

The foregoing describes the embodiments of this application with reference to the accompanying drawings. However, this application is not limited to the foregoing specific embodiments. The foregoing specific embodiments are merely illustrative rather than restrictive. As instructed by this application, persons of ordinary skill in the art may develop many other manners without departing from principles of this application and the protection scope of the claims, and all such manners fall within the protection scope of this application.

## Claims

1. A measurement gap pattern configuration method, comprising:
grouping, by a network-side device, measuring objects for a terminal to obtain a grouping result;
configuring, by the network-side device, a corresponding measurement gap pattern for each different group; and
transmitting, by the network-side device, a first message to the terminal, wherein the first message carries the grouping result and the measurement gap pattern corresponding to each different group.

2. The method according to claim 1, wherein the grouping, by a network-side device, measuring objects for a terminal to obtain a grouping result comprises:
determining, by the network-side device, a gap and offset of samples of measuring objects that need to be measured by the terminal;
determining, by the network-side device, a gap value set for any two of the measuring objects based on the gap and the offset;
dividing, by the network-side device, measuring objects corresponding to a gap value set that meets a target condition into one group; and
dividing, by the network-side device, each measuring object corresponding to a gap value set that does not meet the target condition into a separate group.

3. The method according to claim 2, wherein the gap value set for any two of the measuring objects comprises:
a gap value for any two adjacent samples corresponding to different measuring objects among a plurality of samples corresponding to any two of the measuring objects.

4. The method according to claim 2, wherein the target condition comprises:
the gap value set containing a gap value of 0 and also a non-zero gap value; and all elements in a set of non-zero gap values being integer multiples of a minimum gap value, wherein the minimum gap value is the smallest non-zero gap value in the gap value set.

5. The method according to claim 1 or 2, wherein the first message carries a mapping list, the mapping list being used to indicate mappings between measurement gap patterns and measuring objects.

6. A performance indicator determining method, comprising:
receiving, by a terminal, a first message transmitted by a network-side device, wherein the first message carries a grouping result and a measurement gap pattern corresponding to each different group, the grouping result referring to division of measuring objects for the terminal into different groups; and
determining, by the terminal, a performance indicator associated with the measurement gap pattern.

7. The method according to claim 6, wherein the determining, by the terminal, a performance indicator associated with the measurement gap pattern comprises:
determining, by the terminal, a carrier-specific scaling factor CSSF corresponding to each measuring object in a first group based on a measurement gap pattern corresponding to the first group, wherein the first group is any group in the grouping result; and
determining, by the terminal, the performance indicator based on the CSSF.

8. The method according to claim 6, wherein the grouping result comprises:
measuring objects corresponding to a gap value set that meets a target condition being divided into one group; and
each measuring object corresponding to a gap value set that does not meet the target condition being divided into a separate group.

9. The method according to claim 8, wherein the gap value refers to a gap value set, for any two of the measuring objects, determined based on a gap and offset of samples of a measuring object of the terminal.

10. The method according to claim 9, wherein the gap value set for any two of the measuring objects comprises:
a gap value for any two adjacent samples corresponding to different measuring objects among a plurality of samples corresponding to any two of the measuring objects.

11. The method according to claim 8, wherein the target condition comprises:
the gap value set containing a gap value of 0, and all non-zero gap values being integer multiples of a minimum gap value, wherein the minimum gap value is the smallest non-zero gap value in the gap value set.

12. A measurement gap pattern configuration apparatus, applied to a network-side device and comprising:
a grouping module, configured to group measuring objects for a terminal to obtain a grouping result;
a configuration module, configured to configure a corresponding measurement gap pattern for each different group; and
a transmitting module, configured to transmit a first message to the terminal, wherein the first message carries the grouping result and the measurement gap pattern corresponding to each different group.

13. The apparatus according to claim 12, wherein the grouping module comprises:
a first determining unit, configured to determine a gap and offset of samples of measuring objects that need to be measured by the terminal;
a second determining unit, configured to determine a gap value set for any two of the measuring objects based on the gap and the offset; and
a dividing unit, configured to: divide measuring objects corresponding to a gap value set that meets a target condition into one group, and divide each measuring object corresponding to a gap value set that does not meet the target condition into a separate group.

14. The apparatus according to claim 13, wherein the gap value set for any two of the measuring objects comprises:
a gap value for any two adjacent samples corresponding to different measuring objects among a plurality of samples corresponding to any two of the measuring objects.

15. The apparatus according to claim 13, wherein the target condition comprises:
the gap value set containing a gap value of 0 and also a non-zero gap value; and all elements in a set of non-zero gap values being integer multiples of a minimum gap value, wherein the minimum gap value is the smallest non-zero gap value in the gap value set.

16. The apparatus according to claim 12 or 13, wherein the first message carries a mapping list, the mapping list being used to indicate mappings between measurement gap patterns and measuring objects.

17. A performance indicator determining apparatus, applied to a terminal and comprising:
a receiving module, configured to receive a first message transmitted by a network-side device, wherein the first message carries a grouping result and a measurement gap pattern corresponding to each different group, the grouping result referring to division of measuring objects for the terminal into different groups; and
a determining module, configured to determine a performance indicator associated with the measurement gap pattern.

18. The apparatus according to claim 17, wherein the determining module comprises:
a third determining unit, configured to determine a carrier-specific scaling factor CSSF corresponding to each measuring object in a first group based on a measurement gap pattern corresponding to the first group, wherein the first group is any group in the grouping result; and
a fourth determining unit, configured to determine the performance indicator based on the CSSF.

19. The apparatus according to claim 17, wherein the grouping result comprises:
measuring objects corresponding to a gap value set that meets a target condition being divided into one group; and
each measuring object corresponding to a gap value set that does not meet the target condition being divided into a separate group.

20. The apparatus according to claim 19, wherein the gap value refers to a gap value set, for any two of the measuring objects, determined based on a gap and offset of samples of a measuring object of the terminal.

21. The apparatus according to claim 20, wherein the gap value set for any two of the measuring objects comprises:
a gap value for any two adjacent samples corresponding to different measuring objects among a plurality of samples corresponding to any two of the measuring objects.

22. The apparatus according to claim 19, wherein the target condition comprises:
the gap value set containing a gap value of 0, and all non-zero gap values being integer multiples of a minimum gap value, wherein the minimum gap value is the smallest non-zero gap value in the gap value set.

23. A terminal, comprising a processor, a memory, and a program or instructions stored in the memory and executable on the processor, wherein when the program or instructions are executed by the processor, the steps of the method according to any one of claims 1 to 5 are implemented.

24. A network-side device, comprising a processor, a memory, and a program or instructions stored in the memory and executable on the processor, wherein when the program or instructions are executed by the processor, the steps of the method according to any one of claims 6 to 11 are implemented.

25. A readable storage medium, wherein the readable storage medium stores a program or instructions, and when the program or instructions are executed by a processor, the steps of the method according to any one of claims 1 to 5 are implemented, or the steps of the method according to any one of claims 6 to 11 are implemented.

26. A terminal, wherein the terminal is configured to perform the steps of the method according to any one of claims 1 to 5.

27. A network-side device, wherein the network-side device is configured to perform the steps of the method according to any one of claims 6 to 11.
